# EUROPEAN PATENT SPECIFICATION

(11) **EP 4 377 031 B1**
(45) Date of publication and mention of the grant of the patent: **30.04.2025**
(21) Application number: 22735232.5
(22) Date of filing: 23.06.2022
(51) Int. Cl.: B22F 9/08, B22D 41/08, B22D 41/16, B22D 41/015, B22D 11/118

(54) **ATOMIZER RESERVOIR**
ZERSTÄUBERBEHÄLTER
RÉSERVOIR D'ATOMISEUR

(30) Priority: 26.07.2021 WO PCT/IB2021/056711
(43) Date of publication of application: 05.06.2024
(73) Proprietor: ArcelorMittal, 1160 Luxembourg (LU)
(72) Inventor: BELE, Bertrand, 57050 Metz (FR); GALPIN, Jean-Marie, 57950 Montigny-les-Metz (FR); UMLAUF, William P, Munster, Indiana 46321 (US); BRANNBACKA, Johnny C, Valparaiso, Indiana 46385 (US)
(74) Representative: Lavoix
(86) International application number: PCT/IB2022/055832
(87) International publication number: WO 2023/007271

(56) References cited:
- EP-A1- 0 134 336
- JP-A- S5 577 970
- US-A1- 2015 059 526

## Description

The present invention relates to the production of metal powders and in particular to the production of steel powders by gas atomization for additive manufacturing. The present invention relates in particular to a reservoir of molten metal atomizers. It also relates to the method for producing the metal powders thereof.

There is an increasing demand for metal powders for additive manufacturing and the manufacturing processes have to be adapted consequently.

It is notably known from WO2020041370 to melt metal material in an electric arc furnace, to refine the liquid metal in a ladle and to transfer the ladle with the liquid metal in an atomizer station containing a pouring area, under controlled vacuum and inert atmosphere, comprising the heated tundish of a gas atomizer. The liquid metal is then poured in the tundish at a controlled rate to maintain a minimum level of metal in the tundish while continuing to control the liquid metal temperature in the ladle by induction heating.

The control of the atmospheres, of the pressures and the use of airlocks in the atomizer station makes the process complicated. Furthermore, given the slow flow rates in an atomizer, the liquid metal is very slowly poured from the ladle. It is very difficult to maintain the temperature of the molten metal in these conditions and to avoid the metal freezing. JPS5577970A and US2015/059526 A1 disclose further melt atomizer constructions.

The aim of the present invention is therefore to remedy the drawbacks of the facilities and processes of the prior art by providing a reservoir of molten metal atomizers which can be easily operated and can run continuously.

For this purpose, a first subject of the present invention consists of a reservoir of molten metal atomizer according to claim 1, comprising:
- A tundish comprising:
   o a bottom and a side substantially delimiting a central cavity whose bottom comprises a central portion and a periphery,
   ∘ at least one discharging zone in the form of a top-opened recess in the side of the tundish and comprising:
      ▪ a bottom positioned at most at the level of the periphery of the bottom of the central cavity
      ▪ a discharging opening in the bottom and,
      ▪ a shut-off device for the discharging opening,
- a bell whose lip is positioned towards the bottom of the tundish, the bell being substantially centered on the tundish and extending above at least 50% of the bottom of the tundish, the bell comprising in its upper section a gas injector.

The reservoir according to the invention may also have the optional features listed below, considered individually or in combination:
- The bell further comprises in its upper section a pressure transducer,
- The reservoir further comprises a feeding zone in the form of a top-opened recess in the side of the tundish,
- The reservoir further comprises a level sensor adjacent to the tundish for detecting the level of molten metal in the discharging zone,
- The bottom of the discharging zone is at the level of the periphery of the bottom of the central cavity,
- The bottom of the discharging zone is below the level of the periphery of the bottom of the central cavity,
- The bottom of the central cavity comprises a central flat portion at a first level and a periphery at a lower level,
- The bottom of the central cavity comprises a central dome,
- The side of the tundish comprises refractories,
- The side of the tundish comprises at least one induction heater embedded in the refractories,
- The side of the tundish comprises an induction heater embedded in the refractory of the discharging zone,
- The reservoir comprises at least two discharging zones,
- The at least two discharging zones are regularly distributed along the side of the tundish,
- the shut-off device is a stopper rod,
- The shut-off device is a slide gate,
- The bell is movable, relative to the tundish, in translation along a vertical axis,
- The reservoir further comprises a lifting device capable of vertically translating the bell,
- The discharging zone is partially separated from the central cavity so that the molten metal can only flow between the central cavity and the discharging zone through a conduit joining the bottom of the discharging zone to the bottom of the central cavity,
- The lip of the bell has substantially the same shape and size as the side of the central cavity so that the bell can cover the central cavity without covering the discharging zone,
- The discharging zone comprises a cover,
- The ratio between the volume of the discharging zone and the volume of the reservoir is below 0.4,
- The shape and size of the bell are such that at least the lower part of the bell fits into the central cavity,
- the bell has a rectangular shape with a top portion and four sides,
- the at least two discharging zones are adjacent to two opposite sides of the bell,
- The bell has a rounded shape with a top portion and a rounded side,
- The at least two discharging zones are distributed along the rounded side of the bell,
- The bell is further movable, relative to the tundish, in rotation around the vertical axis,
- the vertical axis is merged with the symmetry axis of the bell.

A second subject of the invention consists of a facility comprising an atomizer comprising an atomization nozzle, the facility further comprising a reservoir according to the invention whose discharging opening is connected to the atomization nozzle of the atomizer.

A third subject of the invention consists of a process for manufacturing metal powders, according to claim 17, comprising:
- (i) pouring molten metal in a reservoir according to the invention, whose discharging opening is connected to the atomization nozzle of an atomizer,
- (ii) maintaining the level of molten metal substantially at a set value in the discharging zone of the tundish by increasing the gas pressure in the bell as molten metal flows through the atomization nozzle.

The process according to the invention may also have the optional features listed below, considered individually or in combination:
- The process further comprises a step (iii) of pouring molten metal in the tundish while simultaneously maintaining the level of molten metal substantially at the set value in the discharging zone of the tundish by decreasing the gas pressure in the bell,
- steps (ii) and (iii) are repeated in sequence.

As it is apparent, the invention is based on a tundish and a bell designed so that the level of molten metal in the zones of the reservoir above the atomization nozzles can be maintained substantially at a set value, preferably substantially constant, even when the tundish is refilled in molten metal by batch. Consequently, the corresponding metallostatic pressure at the atomization nozzle of the atomizers, and thus the flow rate, can be maintained at a set value or substantially at a set value, preferably constant or substantially constant. The design of the reservoir also enables easy ways to avoid the oxidation of the molten metal and to keep the molten metal at the set temperature.

Other characteristics and advantages of the invention will be described in greater detail in the following description.

The invention will be better understood by reading the following description, which is provided purely for purposes of explanation and is in no way intended to be restrictive, with reference to:
- Figure 1, which is top view of a reservoir according to a first variant of the invention,
- Figure 2, which is a sectional view of the reservoir according to figure 1,
- Figure 3, which is a top view of a reservoir according to a second variant of the invention,
- Figure 4, which is a top view of a reservoir according to a third variant of the invention,
- Figure 5, which is a top view of the tundish of the reservoir according to Figure 4, partially filled with molten metal,
- Figure 6, which is a sectional view of the reservoir according to figure 4,
- Figure 7, which is a truncated perspective view of the reservoir according to figure 4, with a high level of molten metal,
- Figure 8, which is a truncated perspective view of the reservoir according to figure 4, with a low level of molten metal.

It should be noted that the terms such as "above", "below", "upper", "lower", "vertical axis"... as used in this application refer to the positions and orientations of the different constituent elements of the reservoir when the latter is installed in a plant and operated or ready for operation.

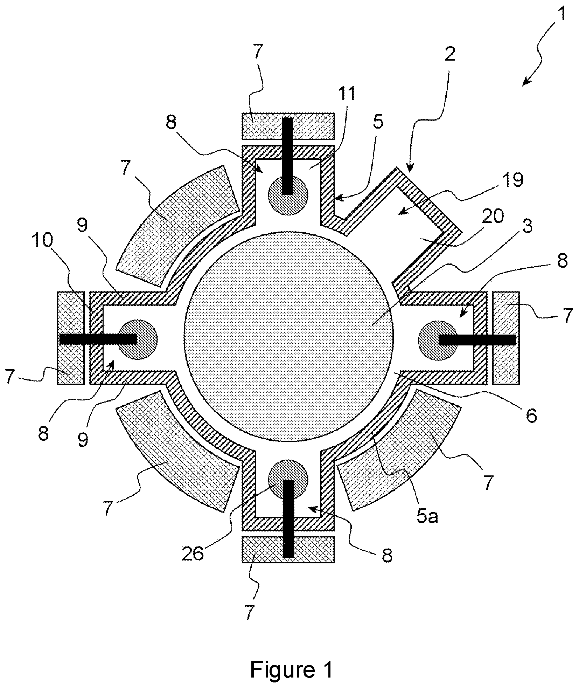

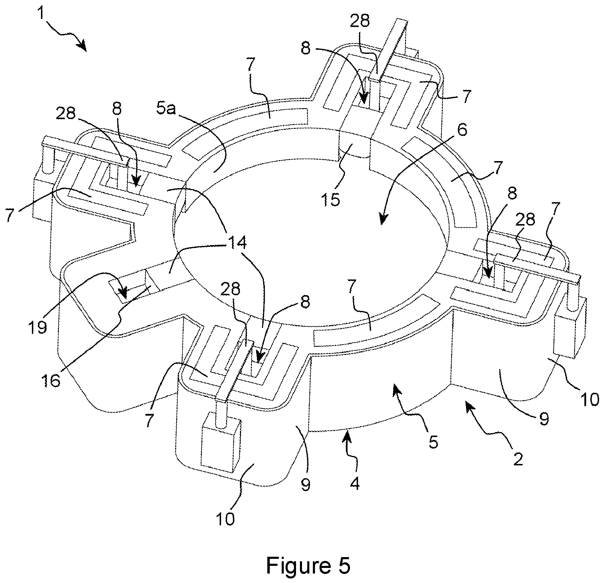

With reference to Figures 1 to 6, the reservoir 1 according to the invention first comprises a tundish 2 and a bell 3.

The tundish 2 is a broad, open vessel. It serves as a buffer of liquid metal and, in the case of steel making, links the discontinuous process of the secondary metallurgy in the ladle with the atomization process, which is preferably continuous.

Basically, the tundish 2 comprises a bottom 4 and a side 5. They both substantially delimit a central cavity 6. By substantially, it is meant here that there are variants of the invention where not all the surface of the bottom and all the surface of the side delimit the central cavity, as detailed below with regard to the recesses. The bottom of the central cavity and the side of the central cavity are portions of respectively the bottom 4 and the side 5 of the tundish and are specifically referred to as 4a and 5a. The shape of the central cavity is not particularly limited in the case of the present invention. It can be notably rectangular or circular.

The inner faces of the bottom 4 and of the side 5 of the tundish are preferably made of materials, such as refractories, which make the tundish capable of containing molten metal. Preferably, the tundish comprises at least one heater 7, such as an induction heater, embedded in the side 5 of the tundish, preferably embedded in the refractories. More preferably, it comprises a plurality of heaters 7 regularly distributed along the side 5 of the tundish or positioned in the zones which are more prone to cooling, such as the discharging zones described below. Even more preferably, an induction heater is embedded in the refractory of each discharging zone.

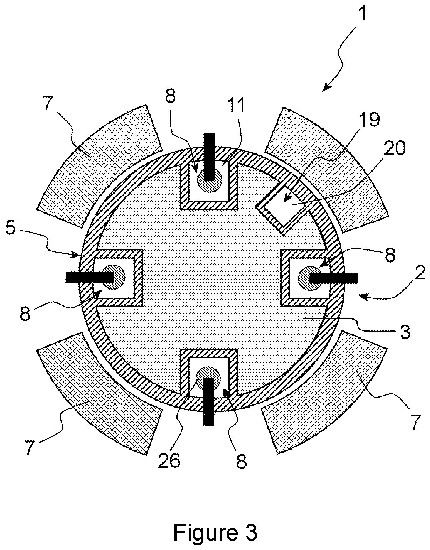

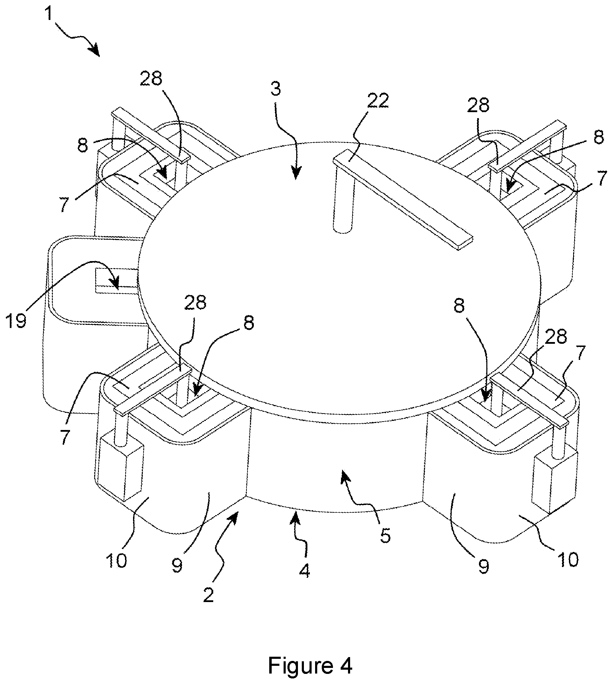

The tundish 2 also comprises at least one discharging zone 8 in the form of a top-opened recess in the side 5 of the tundish 2. By recess, it is meant that a part of the side 5 of the tundish is pushed back from the rest of the side, either inwards or outwards. The recess can thus be an outward recess as illustrated on Figures 1 and 4 or an inward recess as illustrated on Figure 3. For the sake of clarity, the part of the side which is pushed back from the rest of the side can be a portion of the side taken in its full thickness as illustrated on Figure 1 or a portion taken in the thickness of the side as illustrated on Figure 3. In the latter case, the recess is like a hollow in the thickness of the side. By top-opened, it is meant that the top of the recess is not airtightly closed. It can be for example open to the air or closed by a non-airtight cover or lid.

For the sake of clarity, the top-opened recesses are not part of the central cavity 6. In other words, the central cavity 6 is delimited by the bottom 4 and the side 5 of the tundish, all top-opened recesses excluded. Each discharging zone 8 is delimited by the corresponding recess in the side 5 of the tundish and the portion of the bottom 4 of the tundish present in the recess. This portion of the bottom is referred to as the bottom 11 of the discharging zone and is to be distinguished from the bottom 4a of the central cavity. The inner faces of the bottom and of the sides of the discharging zone are preferably made of refractories, possibly in the form of a crucible.

In the case of an outward recess as illustrated on Figures 1 and 4, the top-opened recess comprises preferably two lateral sides 9 and a back side 10, all formed in the side 5 of the tundish. The lateral sides are preferably flat. The back side can be notably flat or rounded to facilitate the movement of molten metal in the recess.

In the case of an inward recess as illustrated on Figure 3, the top-opened recess comprises preferably two lateral sides, a front side and a back side, all formed in the side 5 of the tundish.

The discharging zone 8 is the zone where the molten metal is discharged from the reservoir 1 in the atomizers. Consequently, the bottom 11 of the discharging zone comprises a hole, or discharging opening 12, which is designed for, and capable of, being connected to the atomization nozzle of an atomizer. It can notably comprise an inductively-heated channel.

There are preferably at least two discharging zones so that the discharge of the reservoir can be continuous even if an atomization nozzle connected to a discharging opening get clogged or is damaged or worn. Another advantage of having a plurality of discharging zones, and thus a plurality of atomizers, is to speed up the draining of the reservoir and limit the risk of metal temperature decrease and thus the risk of metal freezing. Consequently, the discharging zones are preferably spaced enough to have several atomizers positioned below the reservoir. More preferably, the discharging zones are regularly distributed along the side of the tundish.

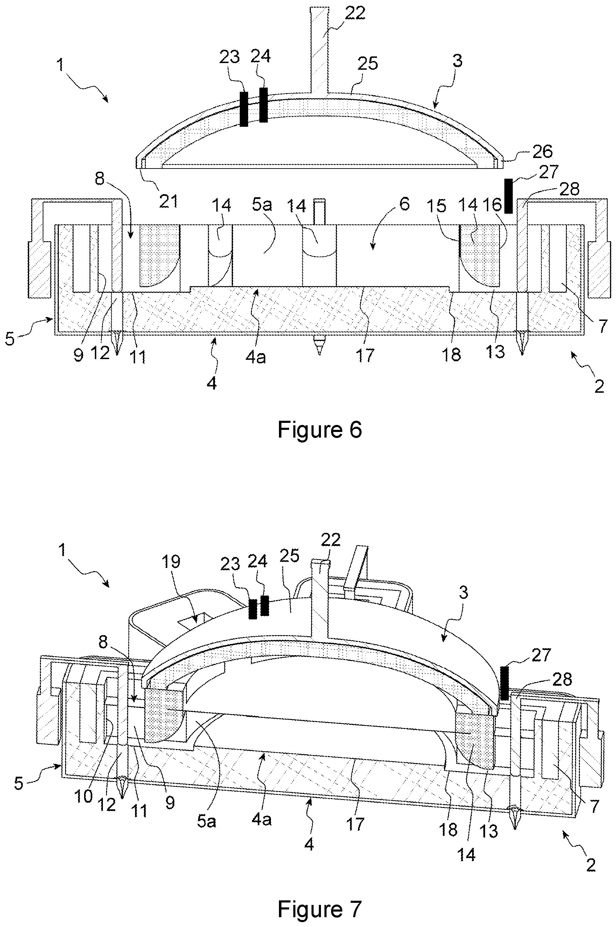

According to one variant of the invention illustrated on Figures 3 and 6, the discharging zones 8 are partially separated from the central cavity 6 so that the molten metal can only flow between the central cavity and each discharging zone through a conduit 13 (visible on Figure 6) joining the bottom 11 of the discharging zone to the bottom 4a of the central cavity. Consequently, it is easier to increase the level of liquid metal in the discharging zones above the level of liquid metal in the central cavity and adjust the metallostatic pressure at the set value. Also, it helps preventing the presence of a dead volume of molten metal in the central cavity when the tundish is emptied during charge/discharge cycles, as it will be explained in greater details later on. The conduit 13 is preferably at least 5 cm heigh, preferably 5 to 15 cm heigh. Consequently, the molten metal can easily circulate between the central cavity and the discharging zone without risk of metal freezing. The conduit is preferably not more than 20 cm heigh to limit the dead volume of molten metal in the central cavity when the tundish is emptied during charge/discharge cycles, as it will be explained in greater details later on.

The discharging zones can be partially separated from the central cavity with a portion of the side of the central cavity, as illustrated on Figure 3. This portion of the side can be made of a refractory. Preferably, the discharging zones are partially separated from the central cavity with a removable refractory barrier 14, as illustrated on Figure 6. In width, it extends between the two lateral sides 9 of the discharging zone and faces the back side 10. In height, it preferably extends up to the top of the side 5a of the central cavity. Consequently, it is easier to maintain the airtightness of the central cavity, when applicable. The removable refractory barrier 14 is separated from the bottom 11 of the discharging zone so as to form the conduit 13. It is preferably separated from the bottom of the discharging zone by at least 5 cm, preferably 5 to 15 cm. Consequently, the molten metal can easily circulate between the central cavity and the discharging zone without risk of metal freezing. The removable refractory barrier is preferably not separated from the bottom of the discharging zone by more than 20 cm to limit the dead volume of molten metal in the central cavity when the tundish is emptied during charge/discharge cycles, as it will be explained in greater details later on.

The inner side 15 of the removable refractory barrier 14, i.e. the side facing the central cavity, has preferably substantially the same shape as the side 5a of the central cavity. The bottom side of the removable refractory barrier 14 is preferably rounded towards the inner side to have the conduit 13 as large as possible on most of its length, which prevents the molten metal from freezing. The outer side 16 of the removable refractory barrier, i.e. the side facing the back side of the discharging zone, can be flat or rounded. The top side is preferably flat similarly to the top of the side 5a of the central cavity.

The removable refractory barrier 14 can be removed from the tundish on demand, for example during maintenance. This can notably be done when the removable refractory barrier is worn and has to be replaced, which may happen more frequently than the replacement of the sides 5a of the central cavity because of the flow of molten metal at the level of the removable refractory barrier. This can also be done if molten metal has frozen in the conduit 13. To ease the removal of the refractory barrier, its lateral sides can comprise a tongue extending vertically along each lateral side. The tongue fits into a groove extending vertically along each lateral side 9 of the discharging zone.

The bottom 4a of the central cavity comprises a central portion 17 and a periphery 18. The bottom can be flat. In that case, the central portion 17 and the periphery 18 are in the same horizontal plane. Alternatively, to further prevent the presence of a dead volume of molten metal in the central cavity when the tundish is emptied, the bottom of the central cavity can be shaped. According to one variant illustrated on Figure 6, the bottom of the central cavity comprises a central portion 17, which is flat and at a first level, and a periphery 18, at a lower level, in the form of a border which is not necessarily continuous and can be limited to the vicinities of the top-opened recesses and/or to the vicinities of the discharging zones. According to another variant, the bottom of the central cavity comprises a central dome. In this variant, the periphery 18 can be limited to the perimeter of the central dome, which is in that case in direct contact with the bottom of the discharging zones or the periphery can be in the form of a continuous or discontinuous border connecting the perimeter of the central dome to the bottom 11 of the discharging zones.

According to one variant of the invention, the bottom 4a of the central cavity comprises or is connected to a heater, such as an induction heater, to heat and stir the molten metal contained in the central cavity. The bottom 4a of the central cavity can also comprise a porous plug for argon bubbling and molten metal stirring.

The level of the bottom 11 of each discharging zone is at most at the level of the periphery 18 of the bottom 4a of the central cavity. Consequently, the metallostatic pressure at the level of the discharging opening can be set and controlled as soon as there is some molten metal in the reservoir. Moreover, the presence of a dead volume of molten metal in the central cavity can be prevented when the tundish is emptied. The level of the bottom 11 of each discharging zone can be at the level of the periphery of the bottom of the central cavity. It can also be below the level of the periphery of the bottom of the central cavity. In this last configuration, the metallostatic pressure at the level of the discharging opening can be easily increased without changing the dimensions of the tundish otherwise.

The bottom of each discharging zone can be flat. Alternatively, it can be shaped, for example convex, to further drain the molten metal. Consequently, the expression "the level of the bottom 11 of each discharging zone is at most at the level of the periphery 18 of the bottom 4a of the central cavity" must be understood as meaning that the lowest part of the bottom 11 is at most at the level of the periphery 18 of the bottom 4a of the central cavity. Preferably, no part of the bottom 11 is positioned above the level of the periphery 18 of the bottom 4a of the central cavity, i.e. the highest part of the bottom 11 is at most at the level of the periphery 18 of the bottom 4a of the central cavity, in order to prevent the presence of a dead volume of molten metal in the discharging zone when the tundish is emptied.

The bottom of each discharging zone further comprises a discharging opening 12 which is designed for, and capable of, being connected to the atomization nozzle of an atomizer. The discharging opening is preferably positioned in the lowest part of the bottom 11 of the discharging zone. It is operated with a shut-off device 28 so that the discharging opening can be opened and closed on demand. The shut-off device can notably be a stopper rod, in particular connected on the side of the tundish, or a slide gate.

As the metallostatic pressure at the level of the discharging openings is controlled during atomization, the discharging zones cannot be emptied at the end of the production while keeping the atomization on. This impacts the yield of the atomizer. In order to minimize this impact, the size of the discharging zones is preferably minimized. According to a preferred variant of the invention, the maximum distance between the sides of the discharging zone and the discharging opening is 40 cm. More preferably, this distance is between 10 and 30 cm. According to another variant, the ratio between the sum of the volumes of the discharging zones and the volume of the reservoir is below 0.4 and more preferably comprised between 0.05 and 0.3.

The tundish preferably further comprises a feeding zone 19, so that the tundish can be easily refilled without moving some parts of the reservoir. The feeding zone is preferably in the form of a top-opened recess, as defined above, preferably in the side of the tundish. The top of the feeding zone is openable to the air so that molten metal can be poured from a ladle in the tundish or so that a ladle shroud can be inserted in the feeding zone to let the molten metal flow from the ladle in the tundish. In one variant of the invention, the top of the feeding zone is open to the air. In that case, the oxidation of the molten metal in the feeding zone can be prevented by adding tundish slag, or casting powder, on the surface. In another variant of the invention, the feeding zone is equipped with a non-airtight lid. In another variant of the invention, the feeding zone is equipped with an airtight lid so that the level in molten metal in the feeding zone can be controlled by adjusting the gas pressure in the feeding zone. In this latter case, the level can be adjusted at a low position in the feeding zone to reduce the dead volume.

The feeding zone 19 is delimited by the corresponding recess in the side 5 of the tundish and the portion of the bottom 4 of the tundish present in the recess. This portion of the bottom is referred to as the bottom 20 of the feeding zone and is to be distinguished from the bottom 4a of the central cavity.

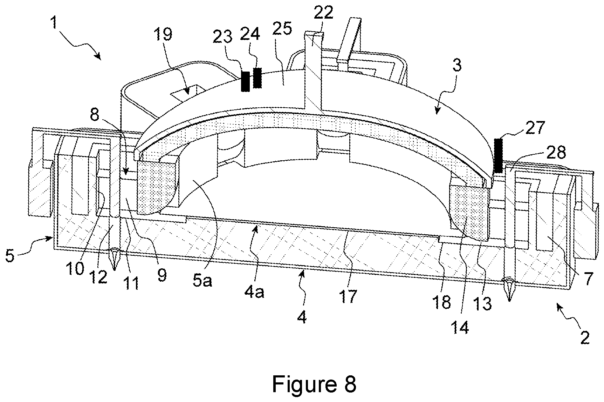

According to one variant of the invention illustrated on Figures 3 and 8, the feeding zone 19 is partially separated from the central cavity 6 so that the molten metal can only flow between the central cavity and the feeding zone through a conduit 13, as described above, joining the bottom of the feeding zone to the bottom 4a of the central cavity. Consequently, it is easier to increase the level of liquid metal in the discharging zones above the level of liquid metal in the central cavity and adjust the metallostatic pressure at the set value. Also, it helps preventing the presence of a dead volume of molten metal in the central cavity when the tundish is emptied during charge/discharge cycles, as it will be explained in greater details later on.

The feeding zone 19 can be partially separated from the central cavity with a portion of the side 5a of the central cavity, as visible on Figure 3. This portion of the side can be made of a refractory. Preferably, the feeding zone is partially separated from the central cavity with a removable refractory barrier 14, as visible on Figure 6 and as described earlier in relation to the discharging zones.

The level of the bottom 20 of the feeding zone is preferably at least at the level of the periphery 18 of the bottom 4a of the central cavity. Consequently, the presence of a dead volume of molten metal in the feeding zone can be prevented when the tundish is fully emptied, for example for repair or maintenance. The level of the bottom 20 can be at the level of the periphery of the bottom of the central cavity. It can also be above the level of the periphery of the bottom of the central cavity.

The bottom 20 of the feeding zone can be flat. Alternatively, it can be shaped, for example convex, to further drain the molten metal. Consequently, the expression "the level of the bottom 20 of the feeding zone is preferably at least at the level of the periphery 18 of the bottom 4a of the central cavity" must be understood as meaning that the lowest part of the bottom 20 is preferably at least at the level of the periphery 18 of the bottom 4a of the central cavity.

The reservoir 1 according to the invention further comprises a bell 3, i.e. a hollow object in the shape of an inverted container so that its lip 21 is oriented downwards. It is positioned above the bottom 4 of the tundish and its lip is thus oriented towards the bottom of the tundish. The bell is substantially centered on the tundish. By substantially centered, it is meant that the bell is positioned above the tundish in such a way that, notably by vertical translation, it can either be inserted in the central cavity so that there is a substantially annular space between the bell and the side 5a of the central cavity or it can lay on the sides 5a of the central cavity and seal the central cavity. The lip is preferably made of ceramic or refractory.

The bell extends above at least 50% of the bottom of the tundish so that a significant volume of molten metal can be displaced by the action of the bell, as it will be explained in greater details later on. If the bell extends above less than 50% of the bottom of the tundish, the reservoir cannot be efficiently emptied and refilled during charge/discharge cycles. In other words, molten metal has to be added to the reservoir in small batches and more frequently. The bell extends above preferably at least 70%, more preferably at least 80%, even more preferably at least 90% of the bottom of the tundish so as to minimize the dead volume of molten metal in the reservoir. The bell extends above preferably at least 50%, more preferably at least 70%, 80% or 90% of the bottom 4a of the central cavity of the tundish.

The bell is preferably movable, relative to the tundish, at least in translation along a vertical axis. Thanks to this mobility, the bell can be lifted above the tundish to give access to the inside of the bell and to the central cavity. This is particularly convenient for maintenance and repair but also to fill the tundish in molten metal or to heat the reservoir before starting the production. In that case, mobile heaters, such as gas burners, can be inserted between the tundish and the bell to heat the refractories. The mobility of the bell can be ensured by a lifting device 22 capable of at least vertically translating the bell.

The bell further comprises in its upper section a gas injector 23. The upper section of the bell is defined as the upper half of the bell. More preferably, the gas injector 23 is positioned at the top of the bell. Consequently, during the reservoir operation, gas can be injected in the bell to increase the pressure in the bell to lower the level of molten metal below the bell, so that the metallostatic pressure at the level of the discharging openings is kept substantially at the set value while the quantity of molten metal in the tundish decreases. Similarly, gas can be released from the bell to decrease the pressure in the bell and increase the level of molten metal below the bell, so that the metallostatic pressure at the level of the discharging openings is kept substantially at the set value while molten metal is added in the tundish. The gas injected in the bell is preferably an inert gas to protect the molten metal below the bell from oxidation.

The bell can further optionally comprise in its upper section a pressure transducer 24. More preferably, the pressure transducer 24 is positioned at the top of the bell. It helps measuring and controlling the pressure in the bell.

The bell can further optionally comprise a level sensor. More preferably, the level sensor is positioned at the top of the bell. It helps controlling the level in molten metal below the bell so that the level is not decreased too much, which prevents gas from being released outside of the bell.

The bell can further optionally comprise a heater such as an inductor, a plasma torch or a gas burner. This helps maintaining the set temperature in the central cavity. The bell can also comprise additional instrumentation to help controlling the process, such as camera, temperature sensor, flow sensor... The bell can also comprise an opening notably for the addition of ferroalloys, molten metal or additional elements.

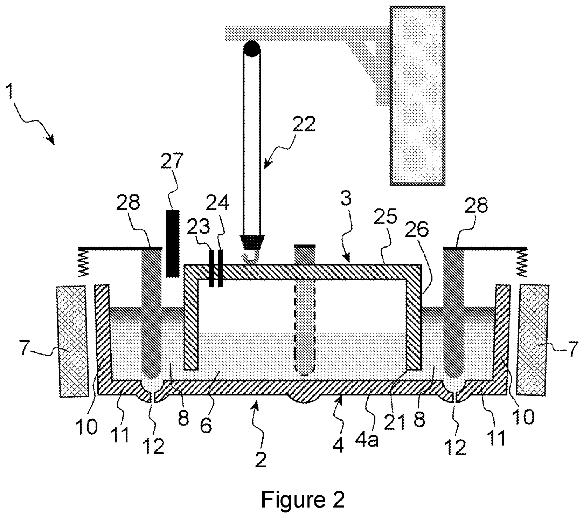

According to a first embodiment of the bell, the shape and size of the bell are such that at least the lower part of the bell fits into the central cavity. Preferably the bell has a surface area projected in the horizontal plane smaller than the surface area of the bottom of the central cavity so that the bell can be positioned in the central cavity. According to a first variant, the central cavity is rectangular and the bell 3 comprises a top portion 25 and four sides 26. The rectangle formed by the four sides 26 is smaller than the central cavity. Consequently, the bell can be inserted in the central cavity and its lip can be immersed in the molten metal contained in the central cavity. In this variant, in the case of two discharging zones 8, they are preferably adjacent to two opposite sides 26 of the bell. In another variant illustrated on Figures 1 and 2, the side 5a of the central cavity 6 of the tundish is circular and the bell 3 comprises a top portion 25 and a side 26 which is circular and whose diameter is shorter than the diameter of the side 5a. Consequently, the bell can be inserted in the central cavity and its lip can be immersed in the molten metal contained in the central cavity. In this variant, the discharging zones 8 are distributed along the rounded side 26 of the bell. Other shapes are of course possible, as long as at least the lower part of the bell can fit into the central cavity so that the lip of the bell can be immersed in the molten metal contained in the central cavity. As the lip can be immersed in the molten metal, the pressure in the bell can be varied and consequently the level of molten metal below the bell can be varied to compensate for either the loss of molten metal in the tundish (as illustrated on Figure 2) or the addition of molten metal in the tundish. It is an easy and convenient way to have an airtight cavity inside the bell without resorting to a complex airtight device. Other shapes of the bell and central cavity are of course possible.

The bell is preferably movable, relative to the tundish, at least in translation along a vertical axis so that the distance between the lip 21 and the bottom 4a of the central cavity can be adjusted. It allows to control the minimum level of molten metal in the central cavity during charge/discharge cycles and when emptying the reservoir. It helps optimizing the yield of the reservoir and thus the yield of the atomizer.

According to one variant, the lip is positioned above the periphery 18 of the central cavity at a lower level than the central portion 17. The level of molten metal can thus be decreased below the level of the central portion while maintaining the appropriate metallostatic pressure at the level of the discharging openings. This minimizes the dead volume of molten metal in the central cavity when the tundish is emptied during charge/discharge cycles.

In the case where the tundish comprises removable refractory barriers 14, the lip 21 of the bell is preferably positioned at the lower level of the removable refractory barriers.

According to one variant, the bell is rotatable around the vertical axis, which is preferably its axis of symmetry. Consequently, the molten metal contained in the central cavity can be efficiently stirred by rotating the portion of the bell immersed in the molten metal which prevents the metal from freezing on the inner or outer side of the bell. This rotation can be ensured by the lifting device 22 also capable of vertically translating the bell.

According to one variant, the bell can be heated to prevent metal freezing upon contact.

The surface of the molten metal contained in the central cavity but not below the bell can be protected from the atmosphere by adding tundish slag, or casting powder, on the surface. This prevents the molten metal from freezing.

According to a second embodiment of the bell, the lip of the bell has substantially the same shape and size as the side of the central cavity so that the bell can cover the central cavity without covering the discharging zone(s) and the feeding zone if any. In that case, the bell, and in particular its lip, can be substantially airtightly positioned on the side 5a of the central cavity, and in particular on the top of the side 5a. In the example illustrated on Figures 4 to 8, the side 5a of the central cavity 6 of the tundish is circular and the bell 3 is a circular dome, i.e. a spherical cap, whose diameter at the level of its lip is substantially the same as the diameter of the side 5a. Consequently, the bell can be lowered and its lip can be positioned on the top of the side of the central cavity so that the connection is substantially airtight. By substantially airtight, it is meant that losses are acceptable so long as the gas flow in the bell is enough to offset the losses and achieve the set gas pressure. Other shapes are of course possible, as long as the lip of the bell can be substantially airtightly connected to the side of the central cavity. As the connection is substantially airtight, the pressure in the bell can be varied and consequently the level of molten metal below the bell can be varied to compensate for either the loss of molten metal in the tundish (as illustrated on figure 8) or the addition of molten metal in the tundish. It is an easy and convenient way to control the pressure in the whole central cavity. It increases the yield of the reservoir and thus the yield of the atomizer.

The reservoir can further optionally comprise a level sensor 27 adjacent to the tundish for detecting the level of molten metal in one discharging zone. Consequently, the level of molten metal can be more easily monitored, corrected and, during production, kept at the set value or substantially at the set value by adjusting the pressure below the bell. The metallostatic pressure is thus kept at the set value, or substantially at the set value as limited variations of the level of molten metal may occur notably because of the response of the regulation loop. As the discharging zones are top-opened recesses, the level of molten metal is the same in all discharging zones and one level sensor can be enough.

The level sensor can be fixed on the reservoir, in particular on one of the discharging zones, more particularly on the lateral side 9 of one discharging zone. Alternatively, the level sensor can be suspended above one of the discharging zones.

The level sensor can be notably a metal sensing electrode, a float control system, a laser system, an eddy-current sensor, a radar sensor.

From a process perspective, the reservoir of molten metal atomizer according to the invention can be easily operated and can run continuously. In particular, it makes it possible to manufacture metal powders by:
- (i) discharging molten metal in a reservoir according to the invention whose discharging opening is connected to the atomization nozzle of an atomizer,
- (ii) maintaining the level of molten metal substantially at a set value in the discharging zone of the tundish by increasing the gas pressure in the bell as molten metal flows through the atomization nozzle.

By substantially, it is meant here that, although the objective is to keep the level of molten metal perfectly at a set value, and thus the molten metal flow perfectly at a set value, limited variations of the level of molten metal may occur notably because of the response of the regulation loop.

The level of molten metal is preferably kept substantially constant but it may have to be adjusted because of variations of pressure loss in the atomization nozzle notably induced by wear or clogging or because the molten metal flow has to be increased or decreased for some reason.

The metal to be atomized can be notably steel, aluminum, copper, nickel, zinc, iron, alloys. Steel includes notably carbon steels, alloyed steels and stainless steels.

According to one variant of the invention, the molten metal to be atomized is steel obtained through a blast furnace route. In that case, pig iron is tapped from a blast furnace and transported to a converter (or BOF for Basic Oxygen Furnace), optionally after having been sent to a hot metal desulfurization station. The molten iron is refined in the converter to form molten steel. The molten steel from the converter is then tapped from the converter to a recuperation ladle and preferably transferred to a ladle metallurgy furnace (LMF). The molten steel can thus be refined in the LMF notably through de-oxidation and a primary alloying of the molten steel can be done by adding ferroalloys or silicide alloys or nitride alloys or pure metals or a mixture thereof. In certain cases where demanding powder compositions have to be produced, the molten steel can be also treated in a vacuum tank degasser (VTD), in a vacuum oxygen decarburization (VOD) vessel or in a vacuum arc degasser (VAD). These equipment allow for further limiting notably the hydrogen, nitrogen, sulphur and/or carbon contents.

The refined molten steel is then poured in a plurality of induction furnaces. Each induction furnace can be operated independently of the other induction furnaces. It can notably be shut down for maintenance or repair while the other induction furnaces are still running. It can also be fed with ferroalloys, scrap, Direct Reduced Iron (DRI), silicide alloys, nitride alloys or pure elements in quantities which differ from one induction furnace to the others.

The number of induction furnaces is adapted to the flow of molten steel coming from the converter or refined molten steel coming from the ladle metallurgy furnace and/or to the desired flow of steel powder at the bottom of the atomizer(s).

In each induction furnace, alloying of the molten steel is done by adding ferroalloys or silicide alloys or nitride alloys or pure metals or a mixture thereof to adjust the steel composition to the composition of the desired steel powder.

Then, for each induction furnace, the molten steel at the desired composition is poured or transferred in a dedicated reservoir according to the invention and connected to at least one gas atomizer.

According to another variant of the invention, the metal to be atomized is steel obtained through an electric arc furnace route. In that case, raw materials such as scraps, metal minerals and/or metal powders are fed into an electric arc furnace (EAF) and melted into heated liquid metal at a controlled temperature with impurities and inclusions removed as a separate liquid slag layer. The heated liquid metal is removed from the EAF into a ladle, preferably into a passively heatable ladle and moved to a refining station where it is preferably placed in an inductively heated refining holding vessel. There, a refining step, such as a vacuum oxygen decarburization is performed to remove carbon, hydrogen, oxygen, nitrogen and other undesirable impurities from the liquid metal. The ladle with the refined liquid metal can then be transferred to a reservoir according to the invention connected to at least one atomizer.

Once the molten metal has been discharged in the tundish 2 of the reservoir according to step (i), it is heated above its liquidus temperature and maintain at this temperature. Thanks to this overheating, the clogging of the atomization nozzle is prevented. Also, stirring the metal notably by induction promotes the inclusion floatation and thus prevents the clogging of the atomization nozzle. Furthermore, the decrease in viscosity of the melted composition helps obtaining a powder with a high sphericity without satellites, with a proper particle size distribution.

Once the molten metal has been discharged in the tundish 2 of the reservoir according to step (i), the bell of the reservoir is optionally put in service position if it is not already in position. According to one variant of the invention illustrated on Figure 2, at least the lower part of the bell, preferably at least its lower half, is positioned in the central cavity of the tundish. Its lip 21 is immersed in the molten metal. Preferably, its lip is positioned at most 20 cm above the bottom 4a of the central cavity, preferably between 5 and 15 cm. According to another variant of the invention, the lip of the bell is positioned on the side 5 of the tundish so as to cover the central cavity substantially airtightly as illustrated on Figures 7 and 8.

The shut-off device(s) 28 of the discharging zone(s) 8 can then be opened to let the molten metal flow through the discharging opening(s) 12 in the atomization nozzle of the atomizer(s) connected to the reservoir and get impinged by jets of gas which atomize it into fine metal droplets.

In a second step (ii), the level of molten metal is maintained substantially at the set value in the discharging zone(s) of the tundish by increasing the gas pressure in the bell as molten metal flows through the atomization nozzle. This is done by controlling the level of molten metal in the discharging zone(s), preferably with the level sensor, and injecting gas in the bell through the gas injector of the bell. The resulting increased pressure in the bell lowers the level of molten metal below the bell, which compensates for the loss of molten metal through the discharging opening(s), as illustrated on Figures 2 and 8. This regulation can be done manually or automatically with the help of the appropriate software comprising a regulation loop.

The gas injected in the bell is preferably Argon, Nitrogen or a mixture thereof to avoid the oxidation of the molten metal.

If and when there is a need for refilling the reservoir in molten metal while the atomization is running, the molten metal can be poured in the tundish, in particular in the feeding zone 19, while simultaneously maintaining the level of molten metal at the set value in the discharging zone(s) of the reservoir by decreasing the gas pressure in the bell (step iii). This is done by controlling the level of molten metal in the discharging zone(s), preferably with the level sensor, and releasing gas out of the bell through the gas injector of the bell. The resulting decreased pressure in the bell increases the level of molten metal below the bell, which compensates for the addition of molten metal in the reservoir. This regulation can be done manually or automatically with the help of the appropriate software comprising a regulation loop.

In order to keep the production running continuously, steps (ii) and (iii) just have to be repeated in sequence.

While molten metal is forced through the discharging opening(s), the molten metal remaining in the tundish is maintained at the atomization temperature until it is forced through the discharging opening(s) and impinged by jets of gas which atomize it into fine metal droplets.

The gas injected through the gas sprayer to atomize the metal stream is preferably argon or nitrogen. They both increase the melt viscosity slower than other gases, e.g. helium, which promotes the formation of smaller particle sizes. They also control the purity of the chemistry, avoiding undesired impurities, and play a role in the good morphology of the powder. Finer particles can be obtained with argon than with nitrogen since the molar weight of nitrogen is 14.01 g/mole compared with 39.95 g/mole for argon. On the other hand, the specific heat capacity of nitrogen is 1.04 J/(g K) compared to 0.52 for argon. So, nitrogen increases the cooling rate of the particles.

The gas flow impacts the particle size distribution and the microstructure of the metal powder. In particular, the higher the flow, the higher the cooling rate. Consequently, the gas to metal ratio, defined as the ratio between the gas flow rate (in m³/h) and the metal flow rate (in Kg/h), is preferably kept between 1 and 5, more preferably between 1.5 and 3.

Once metal particles have been obtained from the atomization of molten metal in the chamber, they can be discharged, cooled and transported.

## Claims

1. Reservoir (1) of molten metal atomizer comprising:
- A tundish (2) comprising:
o a bottom (4) and a side (5) substantially delimiting a central cavity (6) whose bottom (4a) comprises a central portion (17) and a periphery (18),
o at least one discharging zone (8) in the form of a top-opened recess in the side of the tundish and comprising:
▪ a bottom (11) positioned at most at the level of the periphery (18) of the bottom (4a) of the central cavity (6),
▪ a discharging opening (12) in the bottom (11) and,
▪ a shut-off device (28) for the discharging opening,
- a bell (3) whose lip (21) is positioned towards the bottom of the tundish, the bell being substantially centered on the tundish and extending above at least 50% of the bottom of the tundish, the bell comprising in its upper section a gas injector (23).

2. Reservoir according to claim 1 further comprising a feeding zone (19) in the form of a top-opened recess in the side (5) of the tundish (2).

3. Reservoir according to any one of claims 1 or 2 further comprising a level sensor (27) adjacent to the tundish for detecting the level of molten metal in the discharging zone.

4. Reservoir according to any one of the preceding claims wherein the bottom (4a) of the central cavity (6) comprises a central flat portion (17) at a first level and a periphery (18) at a lower level.

5. Reservoir according to any one of the preceding claims comprising at least two discharging zones.

6. Reservoir according to any one of the preceding claims wherein the shut-off device (28) is a stopper rod or a slide gate.

7. Reservoir according to any one of the preceding claims wherein the bell is movable, relative to the tundish, in translation along a vertical axis.

8. Reservoir according to claim 7 further comprising a lifting device (22) capable of vertically translating the bell.

9. Reservoir according to any one of the preceding claims wherein the discharging zone (8) is partially separated from the central cavity (6) so that the molten metal can only flow between the central cavity and the discharging zone through a conduit (13) joining the bottom (11) of the discharging zone to the bottom (4a) of the central cavity.

10. Reservoir according to any one of the preceding claims wherein the lip (21) of the bell has substantially the same shape and size as the side (5a) of the central cavity (6) so that the bell (3) can cover the central cavity without covering the discharging zone (8).

11. Reservoir according to any one of the preceding claims wherein the ratio between the volume of the discharging zone (8) and the volume of the reservoir is below 0.4.

12. Reservoir according to any one of claims 1 to 9 wherein the shape and size of the bell (3) are such that at least the lower part of the bell fits into the central cavity (6).

13. Reservoir according to claim 12 wherein the bell has a rectangular shape with a top portion (25) and four sides (26).

14. Reservoir according to claim 12 wherein the bell has a rounded shape with a top portion (25) and a rounded side (26).

15. Reservoir according to claim 14 wherein the bell (3) is movable, relative to the tundish (2), in rotation around the vertical axis.

16. Facility comprising an atomizer comprising an atomization nozzle, the facility further comprising a reservoir (1) according to any one of claims 1 to 15 whose discharging opening (12) is connected to the atomization nozzle of the atomizer.

17. A process for manufacturing metal powders, comprising:
- (i) pouring molten metal in a reservoir (1) according to any one of claims 1 to 15, whose discharging opening (12) is connected to the atomization nozzle of an atomizer,
- (ii) maintaining the level of molten metal substantially at a set value in the discharging zone (8) of the tundish (2) by increasing the gas pressure in the bell (3) as molten metal flows through the atomization nozzle.

18. Process according to claim 17 further comprising step (iii) of pouring molten metal in the tundish (2) while simultaneously maintaining the level of molten metal substantially at the set value in the discharging zone (8) of the tundish by decreasing the gas pressure in the bell (3).

19. Process according to claim 18 wherein steps (ii) and (iii) are repeated in sequence.

## Patentansprüche

1. Behälter (1) für einen Zerstäuber für geschmolzenes Metall, umfassend:
- einen Verteiler (2), umfassend:
o einen Boden (4) und eine Seite (5), die im Wesentlichen einen zentralen Hohlraum (6) begrenzen, dessen Boden (4a) einen zentralen Teil (17) und einen Umfang (18) aufweist,
o mindestens eine Entleerungszone (8) in Form einer nach oben geöffneten Aussparung in der Seite des Verteilers, die Folgendes umfasst:
■ einen Boden (11), der sich höchstens auf der Höhe des Umfangs (18) des Bodens (4a) des zentralen Hohlraums (6) befindet,
■ eine Entleerungsöffnung (12) im Boden (11) und
■ eine Absperrvorrichtung (28) für die Entleerungsöffnung,
- eine Glocke (3), die so angeordnet ist, dass ihre Lippe (21) zum Boden des Verteilers zeigt, wobei die Glocke im Wesentlichen auf dem Verteiler zentriert ist und sich über mindestens 50 % des Bodens des Verteilers erstreckt, wobei die Glocke in ihrem oberen Abschnitt einen Gasinjektor (23) aufweist.

2. Behälter nach Anspruch 1, der ferner eine Zuführzone (19) in Form einer nach oben geöffneten Aussparung in der Seite (5) des Verteilers (2) umfasst.

3. Behälter nach einem der Ansprüche 1 oder 2, der außerdem einen Füllstandssensor (27) in der Nähe des Verteilers zum Erfassen des Füllstands des geschmolzenen Metalls in der Entleerungszone umfasst.

4. Behälter nach einem der vorhergehenden Ansprüche, wobei der Boden (4a) des zentralen Hohlraums (6) einen zentralen flachen Abschnitt (17) auf einem ersten Niveau und einen Rand (18) auf einem niedrigeren Niveau aufweist.

5. Behälter nach einem der vorhergehenden Ansprüche mit mindestens zwei Entleerungszonen.

6. Behälter nach einem der vorhergehenden Ansprüche, wobei es sich bei der Absperrvorrichtung (28) um eine Stopfenstange oder einen Schieber handelt.

7. Behälter nach einem der vorhergehenden Ansprüche, bei dem die Glocke relativ zum Verteiler entlang einer vertikalen Achse verschiebbar ist.

8. Behälter nach Anspruch 7, umfassend eine Hebevorrichtung (22), die die Glocke vertikal verschieben kann.

9. Behälter nach einem der vorhergehenden Ansprüche, wobei die Entleerungszone (8) teilweise von dem zentralen Hohlraum (6) getrennt ist, sodass das geschmolzene Metall zwischen dem zentralen Hohlraum und der Entleerungszone nur durch eine Leitung (13) fließen kann, die den Boden (11) der Entleerungszone mit dem Boden (4a) des zentralen Hohlraums verbindet.

10. Behälter nach einem der vorhergehenden Ansprüche, wobei die Lippe (21) der Glocke im Wesentlichen die gleiche Form und Größe wie die Seite (5a) des zentralen Hohlraums (6) hat, sodass die Glocke (3) den zentralen Hohlraum abdecken kann, ohne die Entleerungszone (8) zu verdecken.

11. Behälter nach einem der vorhergehenden Ansprüche, wobei das Verhältnis zwischen dem Volumen der Entleerungszone (8) und dem Volumen des Behälters kleiner als 0,4 beträgt.

12. Behälter nach einem der Ansprüche 1 bis 9, wobei die Form und Größe der Glocke (3) so beschaffen ist, dass zumindest der untere Teil der Glocke in den zentralen Hohlraum (6) passt.

13. Behälter nach Anspruch 12, wobei die Glocke eine rechteckige Form mit einem oberen Teil (25) und vier Seiten (26) hat.

14. Behälter nach Anspruch 12, wobei die Glocke eine abgerundete Form mit einem oberen Teil (25) und einer abgerundeten Seite (26) hat.

15. Behälter nach Anspruch 14, wobei die Glocke (3) relativ zum Verteiler (2) um die vertikale Achse drehbar ist.

16. Anlage, umfassend einen Zerstäuber mit einer Zerstäubungsdüse, wobei die Anlage ferner einen Behälter (1) nach einem der Ansprüche 1 bis 15 umfasst, dessen Auslassöffnung (12) mit der Zerstäubungsdüse des Zerstäubers verbunden ist.

17. Verfahren zum Herstellen von Metallpulvern, umfassend:
- (i) Gießen von geschmolzenem Metall in einen Behälter (1) nach einem der Ansprüche 1 bis 15, dessen Auslassöffnung (12) mit der Zerstäubungsdüse eines Zerstäubers verbunden ist,
- (ii) Aufrechterhalten des Füllstands des geschmolzenen Metalls im Wesentlichen auf einem bestimmten Wert in der Entleerungszone (8) des Verteilers (2) durch Erhöhen des Gasdrucks in der Glocke (3), wenn geschmolzenes Metall durch die Zerstäubungsdüse fließt.

18. Verfahren nach Anspruch 17, ferner umfassend den Schritt (iii) des Gießens von geschmolzenem Metall in den Verteiler (2) bei gleichzeitigem Aufrechterhalten des Füllstands des geschmolzenen Metalls im Wesentlichen auf dem eingestellten Wert in der Entleerungszone (8) des Verteilers durch Verringern des Gasdrucks in der Glocke (3).

19. Verfahren nach Anspruch 18, wobei die Schritte (ii) und (iii) nacheinander wiederholt werden.

## Revendications

1. Réservoir (1) d'un atomiseur de métal fondu comprenant :
- un panier de coulée (2) comprenant :
o un fond (4) et un côté (5) délimitant sensiblement une cavité centrale (6) dont le fond (4a) comprend une partie centrale (17) et une périphérie (18),
o au moins une zone de décharge (8) sous la forme d'une cavité ouverte sur le côté du panier de coulée et comprenant :
■ un fond (11) positionné au plus au niveau de la périphérie (18) du fond (4a) de la cavité centrale (6),
■ une ouverture de décharge (12) dans le fond (11) et,
■ un dispositif d'obturation (28) de l'ouverture de décharge,
- une cloche (3) dont la lèvre (21) est positionnée vers le fond du panier de coulée, la cloche étant sensiblement centrée sur le panier de coulée et s'étendant au-dessus d'au moins 50 % du fond du panier de coulée, la cloche comprenant dans sa partie supérieure un injecteur de gaz (23).

2. Réservoir selon la revendication 1 comprend en outre une zone d'alimentation (19) sous la forme d'une cavité ouverte par le haut sur le côté (5) du panier de coulée (2).

3. Réservoir selon l'une des revendications 1 ou 2 comprenant en outre un capteur de niveau (27) adjacent au panier de coulée pour détecter le niveau de métal en fusion dans la zone de décharge.

4. Réservoir selon l'une quelconque des revendications précédentes dans lequel le fond (4a) de la cavité centrale (6) comprend une partie centrale plate (17) à un premier niveau et une périphérie (18) à un niveau inférieur.

5. Réservoir selon l'une quelconque des revendications précédentes comprenant au moins deux zones de décharge.

6. Réservoir selon l'une quelconque des revendications précédentes, dans lequel le dispositif d'obturation (28) est une tige d'arrêt ou une vanne à glissière.

7. Réservoir selon l'une quelconque des revendications précédentes dans lequel la cloche est mobile, par rapport au panier de coulée, en translation le long d'un axe vertical.

8. Réservoir selon la revendication 7 comprenant en outre un dispositif de levage (22) capable de déplacer la cloche verticalement.

9. Réservoir selon l'une quelconque des revendications précédentes dans lequel la zone de décharge (8) est partiellement séparée de la cavité centrale (6) de sorte que le métal en fusion ne peut s'écouler entre la cavité centrale et la zone de décharge qu'à travers un conduit (13) reliant le fond (11) de la zone de décharge au fond (4a) de la cavité centrale.

10. Réservoir selon l'une quelconque des revendications précédentes dans lequel la lèvre (21) de la cloche a sensiblement la même forme et la même taille que le côté (5a) de la cavité centrale (6) de sorte que la cloche (3) peut couvrir la cavité centrale sans couvrir la zone de décharge (8).

11. Réservoir selon l'une quelconque des revendications précédentes dans lequel le rapport entre le volume de la zone de décharge (8) et le volume du réservoir est inférieur à 0,4.

12. Réservoir selon l'une quelconque des revendications 1 à 9, dans lequel la forme et la taille de la cloche (3) sont telles qu'au moins la partie inférieure de la cloche s'insère dans la cavité centrale (6).

13. Réservoir selon la revendication 12, dans lequel la cloche a une forme rectangulaire avec une partie supérieure (25) et quatre côtés (26).

14. Réservoir selon la revendication 12, dans lequel la cloche a une forme arrondie avec une partie supérieure (25) et un côté arrondi (26).

15. Réservoir selon la revendication 14, dans lequel la cloche (3) est mobile, par rapport au panier de coulée (2), en rotation autour de l'axe vertical.

16. Installation comprenant un atomiseur comprenant une buse d'atomisation, l'installation comprenant en outre un réservoir (1) selon l'une quelconque des revendications 1 à 15 dont l'ouverture de décharge (12) est reliée à la buse d'atomisation de l'atomiseur.

17. Procédé de fabrication de poudres métalliques comprenant :
- (i) verser le métal en fusion dans un réservoir (1) selon l'une quelconque des revendications 1 à 15, dont l'ouverture de décharge (12) est reliée à la buse d'atomisation d'un atomiseur,
- (ii) maintenir le niveau de métal en fusion pratiquement à une valeur déterminée dans la zone de décharge (8) du panier de coulée (2) en augmentant la pression du gaz dans la cloche (3) à mesure que le métal en fusion s'écoule à travers la buse d'atomisation.

18. Procédé selon la revendication 17 comprend en outre l'étape (iii) consistant à verser du métal en fusion dans le panier de coulée (2) tout en maintenant simultanément le niveau de métal en fusion sensiblement à la valeur de consigne dans la zone de décharge (8) du panier de coulée en réduisant la pression du gaz dans la cloche (3).

19. Procédé selon la revendication 18, dans lequel les étapes (ii) et (iii) sont répétées en séquence.
